(19) Europäisches Patentamt / European Patent Office / Office européen des brevets

(11) **EP 1 065 284 B2**

(12) **NOUVEAU FASCICULE DE BREVET EUROPEEN**
Après la procédure d'opposition

(45) Date de publication et mention de la décision concernant l'opposition:
**13.01.2016   Bulletin 2016/02**

(51) Int Cl.:
**C21D 8/04** *(2006.01)*     **C21D 9/48** *(2006.01)*

(45) Mention de la délivrance du brevet:
**04.09.2002   Bulletin 2002/36**

(21) Numéro de dépôt: **00401867.7**

(22) Date de dépôt: **30.06.2000**

(54) **Tole d'acier à bas carbone calmé à l'aluminium pour emballage**

Aluminiumberuhigtes, niedriggekohltes Stahlband für Behälter

Aluminum killed low carbon steel sheet for cans

(84) Etats contractants désignés:
**AT BE CH CY DE DK ES FI FR GB GR IE IT LI LU MC NL PT SE**

(30) Priorité:  **01.07.1999   FR 9908413**

(43) Date de publication de la demande:
**03.01.2001   Bulletin 2001/01**

(73) Titulaire: **ArcelorMittal**
**1160 Luxembourg (LU)**

(72) Inventeur: **Bouzekri, Mohamed**
**57120 Rombas (FR)**

(74) Mandataire: **Domenego, Bertrand et al**
**Cabinet Lavoix**
**2, place d'Estienne d'Orves**
**75441 Paris Cedex 09 (FR)**

(56) Documents cités:
**EP-A- 0 360 955     EP-A- 0 906 961**
**DE-C- 19 622 164     FR-A- 2 472 021**
**GB-A- 2 086 425     US-A- 4 698 103**

• **PATENT ABSTRACTS OF JAPAN vol. 006, no. 044 (C-095), 19 mars 1982 (1982-03-19) & JP 56 158822 A (NIPPON STEEL CORP), 7 décembre 1981 (1981-12-07)**

**Description**

La présente invention concerne le domaine des aciers pour application dans le domaine de l'emballage métallique, alimentaire, non alimentaire ou industriel.

Les aciers élaborés pour des utilisations propres à l'emballage métallique se différencient surtout des tôles minces par leurs caractéristiques physiques.

Les épaisseurs des tôles d'acier pour emballage varient de 0,12 mm à 0,25 mm pour la plus grande majorité des utilisations, mais peuvent atteindre des épaisseurs plus importantes, jusqu'à 0,49 mm pour des applications très particulières. C'est par exemple le cas de certains emballages non alimentaires, comme par exemple certains aérosols, ou le cas de certains emballages industriels. Elles peuvent également descendre jusqu'à 0,08 mm, par exemple dans le cas des barquettes alimentaires.

Les tôles d'acier pour emballage sont habituellement revêtues d'un revêtement métallique (étain, refondu ou non, ou chrome) sur lequel est généralement déposé un revêtement organique (vernis, encres, films plastiques).

Dans le cas des emballages deux pièces, ceux-ci sont réalisés par emboutissage sous serre-flan, ou par emboutissage/repassage pour les boites boissons, et sont généralement des boites axisymétriques, cylindriques ou tronconiques. Cependant, les emballagistes montrent un intérêt de plus en plus marqué pour des aciers d'épaisseurs toujours plus faibles, de 0,12 mm à 0,075 mm et, dans le souci de se différencier des concurrents, ils cherchent à innover dans des formes de plus en plus complexes. Aussi trouvons nous maintenant des boites de formes originales, fabriquées dans des tôles d'acier de faibles épaisseurs qui, bien que présentant de plus grandes difficultés de formage, doivent répondre aux critères d'utilisation (tenue mécanique de l'emballage, résistance à la charge axiale qu'ils subissent lors de leur entreposage en empilement, résistance à la surpression interne qu'ils subissent pendant le traitement thermique de stérilisation et à la dépression interne qu'ils subissent après le refroidissement) et donc présenter une très haute résistance mécanique.

Ainsi, la mise en oeuvre et la performance de ces emballages dépendent d'un certain nombre de caractéristiques mécaniques de l'acier :

- le coefficient d'anisotropie planaire $\Delta c$ aniso,
- le coefficient de Lankford,
- la limite d'élasticité Re,
- la résistance maximale à la rupture Rm,
- l'allongement A%,
- l'allongement réparti Ag%.

Pour conférer à l'emballage une tenue mécanique équivalente à épaisseur d'acier inférieure, il est indispensable que la tôle d'acier présente une résistance maximale à rupture plus élevée.

Pour la réalisation d'emballages, il est connu d'utiliser des aciers standards à bas carbone et bas manganèse, calmés à l'aluminium.

La teneur en carbone visée habituellement pour ce type d'acier est comprise entre 0,020% et 0,040%, car des teneurs supérieures à 0,040% conduisent à des caractéristiques mécaniques moins favorables à l'emboutissage et des teneurs inférieures à 0,020% induisent une propension au vieillissement naturel de la tôle, en dépit d'un vieillissement au recuit.

La teneur en manganèse est réduite au maximum en raison d'un effet défavorable de cet élément sur la valeur du coefficient de Lankford pour des aciers non dégazés sous vide. Ainsi la teneur en manganèse visée est comprise entre 0,15 et 0,25%.

Ces tôles d'acier sont réalisées par laminage à froid d'une bande à chaud, avec un taux de laminage à froid compris entre 75% et plus de 90%, suivi d'un recuit en continu à une température comprise entre 640 et 700°C, et d'un second laminage à froid avec un taux d'allongement au cours de ce second laminage à froid variable entre 2% et 45% selon le niveau de résistance maximale à la rupture Rm visé.

Mais, pour les aciers à bas carbone calmés à l'aluminium, des caractéristiques mécaniques élevées sont associées à une capacité d'allongement faible. Cette faible ductilité, outre le fait qu'elle est défavorable à la mise en forme de l'emballage, entraîne dans cette mise en forme un amincissement des parois qui va être défavorable aux performances de l'emballage.

Ainsi par exemple un acier bas carbone calmé aluminium présentant une résistance maximale à la rupture Rm de l'ordre de 550 MPa, présentera un taux d'allongement A% de l'ordre de 1 à 3% seulement.

La présente invention a pour but de proposer une tôle d'acier bas carbone calmé aluminium pour emballage qui présente, à niveau de résistance maximale à la rupture équivalente aux aciers bas carbone calmés aluminium de l'état de la technique, un taux d'allongement A% plus élevé.

Pour obtenir ces caractéristiques, l'invention a pour objet un procédé de fabrication d'une bande d'acier bas carbone calmé à l'aluminium pour emballage, dans lequel :

- on approvisionne une bande d'acier laminée à chaud comportant en poids entre 0,022 et 0,035 % de carbone, entre 0,15 et 0,25 % de manganèse, entre 0,040 et 0,070 % d'aluminium, entre 0,0035 et 0,0060% d'azote, le reste étant du fer et des impuretés résiduelles inévitables,
- on effectue un premier laminage à froid de la bande,
- on soumet la bande laminée à froid à un recuit,
- on effectue éventuellement un laminage à froid secondaire,
  caractérisé en ce que le recuit est un recuit continu dont le cycle comporte :
- une montée en température jusqu'à une température supérieure à la température de début de transformation perlitique $Ac_1$,
- un maintien de la bande au dessus de cette température pendant une durée supérieure à 10 secondes,
- un refroidissement rapide de la bande jusqu'à une température inférieure à 100°C à une vitesse de refroidissement comprise entre 100 et 500°C/s
- un traitement thermique à basse température comprise entre 100°C et 300°C pendant une durée supérieure à 10 secondes,
- et un refroidissement jusqu'à la température ambiante.

Selon d'autres caractéristiques du procédé selon l'invention:

- après refroidissement rapide de la bande et avant traitement thermique à basse température, on effectue une opération de déformation plastique en allongement de la bande avec un taux d'allongement compris entre 1 et 5% ;
- la bande est maintenue au cours du recuit à une température comprise entre $Ac_1$ et 800°C, pendant une durée de 10 secondes à 2 minutes ;
- la bande est maintenue au cours du traitement thermique à basse température comprise entre 100°C et 300°C, pendant une durée comprise entre 10 secondes et 2 minutes ;
- l'opération de déformation plastique en allongement de la bande est effectuée par planage sous traction ou par laminage.

L'invention concerne également une tôle d'acier bas carbone calmé à l'aluminium pour emballage, comportant en poids entre 0,022 et 0,035 % de carbone, entre 0,15 et 0,25 % de manganèse, entre 0,040 et 0,070 % d'aluminium, entre 0,0035 et 0,0060% d'azote, le reste étant du fer et des impuretés résiduelles inévitables, fabriquée selon le procédé ci-dessus, caractérisé en ce qu'elle présente à l'état vieilli un taux d'allongement A% satisfaisant la relation :

$$(670 - Rm) / 14 \leq A\% \leq (720 - Rm) / 17$$

Rm étant la résistance maximale à la rupture de l'acier, exprimée en MPa.

Les caractéristiques et avantages apparaîtront plus clairement dans la description qui suit, donnée uniquement à titre d'exemple, faite en référence aux figures jointes en annexe.

Selon d'autres caractéristiques de la tôle, l'acier comporte des atmosphères de COTTRELL et/ou des carbures epsilon précipités à basse température, et présente un nombre de grains par $mm^2$ supérieur à 20000.

Les figures 1 et 2 sont des diagrammes montrant l'influence de la température de recuit sur la résistance maximale à rupture Rm.

La figure 3 est un diagramme montrant l'influence de la vitesse de refroidissement sur la résistance maximale à rupture Rm.

La figure 4 est un diagramme montrant l'influence de la vitesse de refroidissement sur la résistance maximale à rupture Rm et le taux d'allongement A%.

La figure 5 est un diagramme montrant l'influence de la vitesse de refroidissement sur la dureté HR30T.

La figure 6 est un diagramme montrant l'influence du traitement thermique à basse température sur la résistance maximale à rupture Rm.

La figure 7 est un diagramme montrant l'influence du traitement thermique à basse température sur et le taux d'allongement A%.

La figure 8 est un diagramme montrant l'influence de la déformation plastique en allongement sur la résistance maximale à rupture Rm.

Plusieurs essais ont été réalisés, tout d'abord en laboratoire puis en conditions industrielles, pour valider les caractéristiques de l'invention. Les résultats complets de deux de ces essais vont maintenant être décrits.

Ces essais concernent deux bobines à froid en acier à bas carbone calmé à l'aluminium, dont les caractéristiques sont reproduites dans le tableau 1 ci-après.

Tableau 1

|   | Teneurs (10⁻³ %) | | | | Laminage à chaud | | | Laminage à froid | |
|---|------|------|------|-----|----------|-----------|---------|----------|---------|
|   | C | Mn | Al | N | TFL (°C) | Tbob (°C) | Ep (mm) | T réd. (%) | Ep (mm) |
| **A** | 23 | 186 | 50 | 3,6 | 860/880 | 530/565 | 1,97 | 89,8 | 0,20 |
| **B** | 25 | 203 | 58 | 4,6 | 860/880 | 530/565 | 2,00 | 87 | 0,28 |

Dans la première colonne, on a repéré la bobine ; dans les deuxième à cinquième colonnes, on a indiqué en 10⁻³ % poids les teneurs des constituants principaux ayant une importance. Les sixième à huitième colonnes concernent les conditions de laminage à chaud : dans la sixième colonne, on a indiqué la température de fin de laminage à chaud ; dans la septième colonne, la température de bobinage ; dans la huitième colonne, l'épaisseur de la bande à chaud. Enfin les colonnes neuf et dix concernent les conditions de laminage à froid : dans la neuvième colonne, on a indiqué le taux de réduction du laminage à froid et dans la dixième colonne, l'épaisseur finale de la bande à froid.

Ces deux bandes standards ont fait l'objet de recuits différenciés suivi de seconds laminages à froid également différenciés.

Les températures de maintien au recuit ont varié de 650°C à 800°C, les vitesses de refroidissement ont varié de 40°C/s à 400°C/s, les températures de recuit à basse température ont varié de 150 à 350°C, et les taux d'allongement au second laminage ont varié de 1% à 42%, avec ou sans déformation plastique en alllongement intermédiaire.

Outre les examens micrographiques, la caractérisation du métal issu de ces différents essais a consisté d'une part à faire des tractions sur des éprouvettes ISO 12,5x50 dans le sens du laminage et en sens travers, à l'état frais et à l'état vieilli après vieillissement à 200°C pendant 20 minutes, d'autre part de déterminer la dureté HR30T également à l'état frais et à l'état vieilli.

Ces essais ont permis de démontrer qu'il est possible d'augmenter considérablement la résistance maximale à la rupture Rm pour le même acier bas carbone calmé à l'aluminium, à taux d'allongement au second laminage à froid identique, si on pratique entre les deux laminages à froid un recuit continu selon les conditions de l'invention.

Dit autrement, ces essais ont permis de démontrer qu'il est possible d'augmenter considérablement la ductilité A% pour le même acier bas carbone calmé à l'aluminium, à résistance maximale à la rupture Rm identique, si on pratique entre les deux laminages à froid un recuit continu selon les conditions de l'invention, car le même niveau de Rm est atteint avec un taux d'allongement plus faible au cours du second laminage. Ainsi, il devient possible de réaliser des qualités d'acier bas carbone calmé à l'aluminium avec un niveau de Rm de l'ordre de 380 MPa sans nécessiter de second laminage après recuit, sauf peut être une opération d'écrouissage léger appelé skin-pass qui permet de supprimer le palier de limite d'élasticité présent sur le métal en sortie du recuit.

Incidence de la composition de l'acier

Comme indiqué précédemment, l'invention ne se situe pas dans la composition de l'acier, qui est un acier bas carbone calmé à l'aluminium standard.

Comme tous les aciers bas carbone calmés à l'aluminium, ce sont essentiellement les teneurs en carbone et en manganèse qui sont importantes :

- la teneur en carbone visée habituellement pour ce type d'acier est comprise entre 0,022% et 0,040%, car des teneurs supérieures à 0,040% conduisent à des caractéristiques mécaniques moins favorables à l'emboutissage. Pour des teneurs inférieures à 0,022%, il n'y a pas de transformation perlitique au refroidissement, et cette transformation perlitique est nécessaire et recherchée ;
- la teneur en manganèse est réduite au maximum en raison d'un effet défavorable de cet élément sur la valeur du coefficient de Lankford pour des aciers non dégazés sous vide ; ainsi la teneur en manganèse visée est comprise entre 0,15 et 0,25%.

L'azote et l'aluminium sont également deux éléments qu'il convient de contrôler.

L'azote est mis en excès si on souhaite obtenir un acier dur et vieillissant. Généralement, il est compris entre 0,0035 et 0,0060%.

L'aluminium est utilisé pour calmer l'acier. Généralement, il est compris entre 0,040 et 0,070%.

Incidence des conditions de dénaturation à chaud

Les aciers bas carbone calmés à l'aluminium recuits en continu sont généralement laminés à une température supérieure à $Ar_3$.

Le paramètre essentiel est la température de bobinage, et on préfère un bobinage froid, entre 500 et 620°C. En effet, le bobinage chaud, à une température supérieure à 650°C présente deux inconvénients :

- il génère des hétérogénéités de caractéristiques mécaniques en liaison avec les différences de vitesses de refroidissement entre le coeur et les extrémités de la bande ;
- il induit un risque de croissance anormale des grains, laquelle peut se produire pour certains couples (température de fin de laminage, température de bobinage) et peut constituer un défaut rédhibitoire aussi bien en tôle à chaud qu'en tôle à froid.

Néanmoins un bobinage chaud peut être effectué en pratiquant par exemple un bobinage sélectif : la température est plus élevée en extrémités de la bande.

Incidence des conditions de laminage à froid

De par les faibles épaisseurs finales à réaliser, le domaine du taux de réduction à froid s'étend de 75% à plus de 90%.

Les facteurs principaux qui interviennent dans la définition du taux de réduction à froid sont bien évidemment l'épaisseur finale du produit, et sur ce point on peut jouer sur l'épaisseur du produit à chaud, ainsi que des considérations métallurgiques.

Les considérations métallurgiques sont basées sur l'incidence du taux de réduction à froid sur l'état microstructural, et par voie de conséquence sur les caractéristiques mécaniques après recristallisation et recuit. Ainsi plus le taux de réduction à froid augmente, plus la température de recristallisation est faible, plus les grains sont faibles et plus Re et Rm sont élevés. En particulier, le taux de réduction peut avoir une incidence très forte sur le coefficient de Lankford.

Dans le cas d'exigences en termes de cornes d'emboutissage, il convient par exemple d'optimiser la nuance d'acier et surtout la teneur en carbone, et le taux de réduction du laminage à froid avec la dureté ou les caractéristiques mécaniques souhaitées pour obtenir un métal dit « métal sans cornes ».

Incidence du recuit

Une caractéristique importante de l'invention réside dans la température de recuit. Il est important que la température de recuit soit supérieure au point de début de transformation perlitique $Ac_1$ (de l'ordre de 720°C pour ce type d'acier).

Une autre caractéristique importante de l'invention réside dans la vitesse de refroidissement qui doit être comprise entre 100 et 500°C/s.

Au cours du maintien de la bande à une température supérieure à $Ac_1$, il se forme de l'austénite, riche en carbone. Le refroidissement rapide de cette austénite permet de maintenir une certaine quantité de carbone et d'azote à l'état libre.

Il est donc important de réaliser un refroidissement rapide, compris entre 100 et 500°C/s au moins jusqu'à une température inférieure à 100°C. Si le refroidissement rapide est arrêté avant 100°C, les atomes de carbone et d'azote libres vont pouvoir se combiner et l'effet recherché ne sera pas atteint. Il est bien évident qu'un refroidissement rapide jusqu'à la température ambiante est possible.

Il est également possible d'effectuer un refroidissement à une vitesse supérieure à 500°C/s, mais la Demanderesse a constaté que au delà de 500°C/s, l'influence d'une augmentation de la vitesse de refroidissement n'est plus très significative.

Ce recuit à haute température avec refroidissement rapide est suivi d'une traitement thermique à basse température, que l'on pourrait qualifier de traitement thermique de pseudo-survieillissement.

La caractéristique essentielle de ce traitement thermique à basse température réside dans la température de maintien de la bande, qui doit être comprise entre 100 et 350°C. Les vitesses de montée en température et de refroidissement au cours de ce traitement thermique à basse température ont peu d'importance.

Ce traitement thermique à basse température a pour but de faire précipiter les atomes de carbone libres sous forme de précipités fins et dispersés de carbures basse tempéraure et/ou de carbures epsilon. Il permet également la ségrégation des atomes de carbone et d'azote libres au niveau des dislocations pour former des atmosphères de COTTRELL.

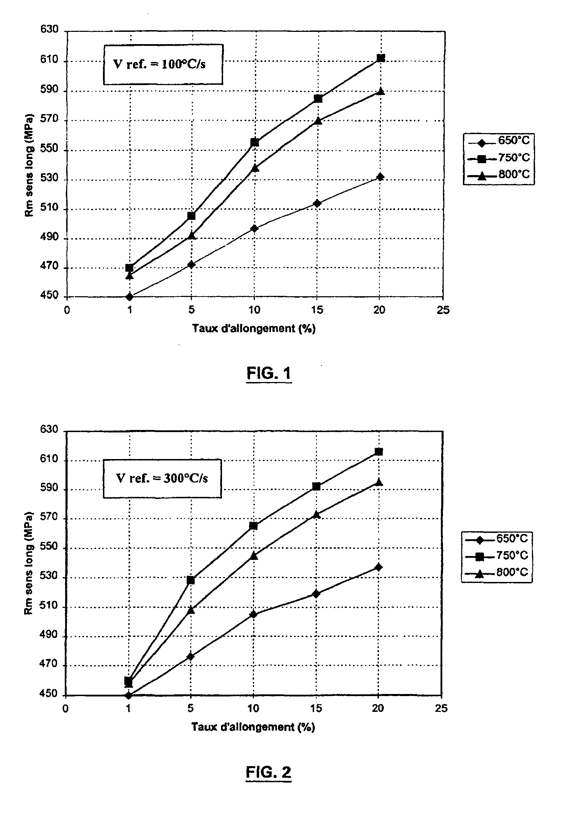

Les figures 1 et 2 présentent l'influence de la température de recuit à vitesse de refroidissement constante (Visée 100°C/s et réalisée 73 à 102°C/s sur la figure 1 ; Visée 300°C/s et réalisée 228 à 331°C/s sur la figure 2) sur la résistance maximale à la rupture Rm.

On constate sur ces figures une nette augmentation de Rm à taux d'allongement du second laminage identique pour les aciers recuits à 740°C et à 780°C par rapport aux mêmes aciers recuits à 650°C et à 680°C.

Toutefois, cette influence de la température de recuit sur la résistance maximale à la rupture Rm n'est pas très perceptible pour des taux d'allongement au second laminage à froid inférieurs à 3%. Elle ne devient vraiment significative qu'à partir de 5% d'allongement au second laminage à froid.

Une température trop élevée, supérieure à 800°C, entraîne une précipitation, au moins partielle de l'azote sous la forme de nitrures d'aluminium. Cet azote précipité ne participe plus au durcissement de l'acier, ce qui a pour effet une baisse de la résistance maximale à la rupture Rm. Ce phénomène est entrevu sur la figure 2 sur laquelle on remarque, pour des taux d'allongement supérieurs à 10 %, une baisse de l'augmentation de la résistance maximale à la rupture Rm entre l'échantillon recuit à 750°C et l'échantillon recuit à 800°C.

Le temps de maintien de la bande entre 720°C et 800°C doit être suffisant pour remettre tout le carbone correspondant à l'équilibre en solution. Un maintien pendant 10 secondes est suffisant pour s'assurer cette remise en solution de la quantité de carbone correspondant à l'équilibre pour les aciers dont la teneur en carbone est comprise entre 0,022 et 0,035%, et un maintien au delà de 2 minutes, bien que possible, est inutile et coûteux.

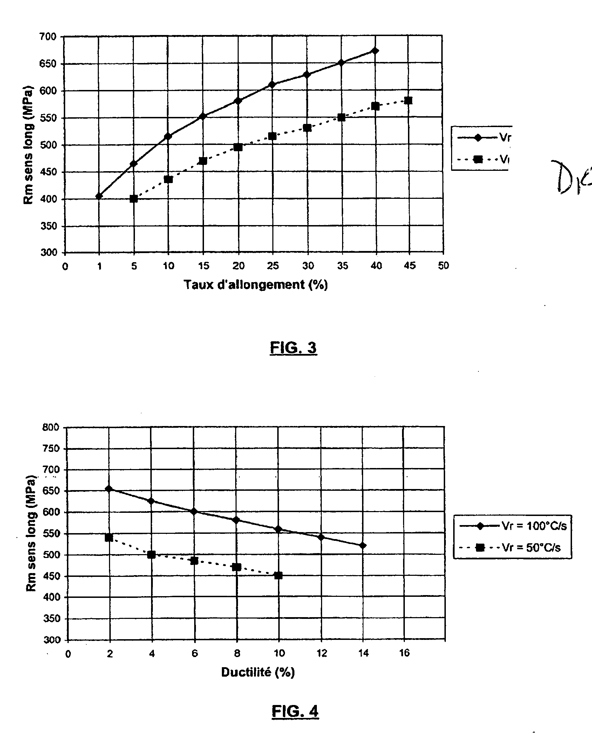

Les figures 3 et 4 présentent l'influence de la vitesse de refoidissement à température de recuit constante (750°C) maintenue pendant 20 secondes.

Comme on peut le voir sur la figure 3, à 10% d'allongement au second laminage à froid, la résistance maximale à la rupture Rm de l'acier est égale à environ 520 MPa si la vitesse de refroidissement est égale à 100°C/s, alors qu'elle n'atteint que 440 MPa si la vitesse de refroidissement est égale à 50°C/s.

On peut donc réaliser un acier bas carbone calmé à l'aluminium dont la valeur de Rm est égale à 520 MPa avec seulement 10% d'allongement au second laminage à froid si la vitesse de refroidissement est égale à 100°C/s, alors qu'il faut effectuer un second laminage à froid avec un taux d'allongement de 25% si la vitesse de refroidissement n'est que de 50°C/s.

Ce plus faible taux d'allongement au second laminage à froid permet de moins dégrader la ductilité de l'acier. On voit ainsi sur la figure 4 que l'acier dont Rm est égal à 520 MPa présente une ductilité A% égale à 14 lorsque la vitesse de refroidissement est égale à 100°C/s, alors qu'elle est égale à 3,5 lorsque la vitesse de refroidissement est égal à 50°C/s.

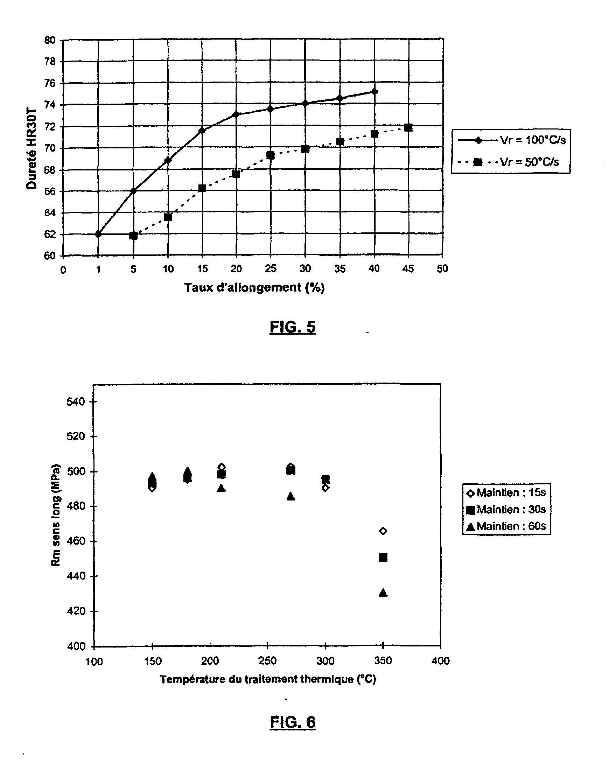

Cette constatation est également valable sur la dureté de l'acier. Comme on le voit sur la figure 5, pour un même taux d'allongement au second laminage à froid, la dureté de l'acier augmente si la vitesse de refroidissement est égale à 100°C/s. Cette augmentation de la dureté est due à une teneur en carbone libre plus élevée et/ou à la présence des précipités fins et dispersés.

Comme on peut le voir sur la figure 6, pour un acier recuit pendant 20 secondes à 750°C et refroidit avec une vitesse de refroidissement égale à 100°C/s puis laminé à froid avec un taux d'allongement égal à 10%, la résistance maximale à la rupture Rm augmente si on effectue un traitement thermique à basse température après le recuit à haute température. Ainsi, par exemple, pour l'acier A, le traitement thermique à 150°C permet d'augmenter la valeur de Rm d'environ 50 MPa avec un taux de laminage à froid secondaire égale à 10% par rapport au même acier n'ayant pas subi de traitement thermique à basse température et ayant subi un laminage à froid secondaire avec un taux d'allongement égal à 18% (Rm = 520 MPa sans traitement thermique à basse température après recuit à haute température, et Rm = 490 MPa après traitement thermique à 150°C).

On constate sur cette figure que la résistance maximale à la rupture Rm diminue quand la température du traitement thermique dépasse 300°C. Par exemple, après traitement thermique à 350°C, la valeur de Rm est seulement égale en moyenne à 450 MPa, ce qui représente une baisse de 20 MPa par rapport au même acier obtenu sans traitement thermique à basse température, à la différence de taux d'allongement au cours du laminage à froid secondaire près. Cette diminution de Rm avec la température du traitement thermique est due à une précipitation du carbone sous la forme de cémentite.

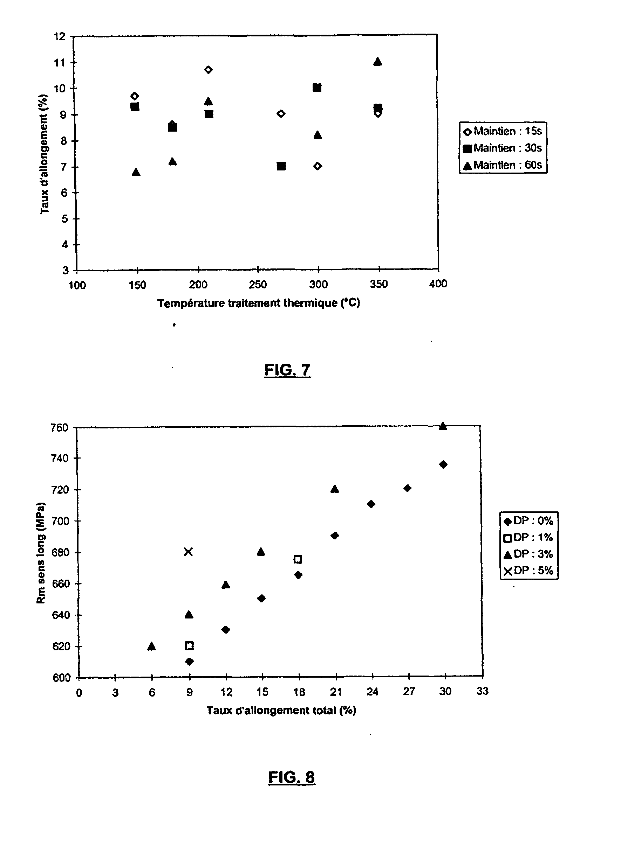

Comme on le voit sur la figure 7, le traitement thermique à basse température permet également d'augmenter le taux d'allongement A%, qui passe ainsi de 4,8% à une moyenne de 9%, toutes conditions égales par ailleurs.

## Incidence de la déformation plastique en allongement

Il est possible d'accroitre encore le phénomène de durcissement de l'acier en effectuant, après refroidissement rapide de la bande et avant traitement thermique à basse température, une opération de déformation plastique en allongement de la bande avec un taux d'allongement compris entre 1 et 5%.

Cette déformation plastique crée des dislocations sur lesquelles vont se former, au cours du traitement thermique à basse température, des atmosphères de COTTRELL, c'est à dire des accumulations d'atomes de carbone et d'azote libres autour des dislocations engendrées par la déformation plastique, et/ou des carbures epsilon. Ainsi, à la suite du traitement thermique à basse température, les dislocations engendrées par la déformation du matériau seront immobilisées ou ancrées par ces atmosphères de COTTRELL ce qui a pour effet un durcissement de l'acier.

Comme on le voit sur la figure 8, à taux d'allongement total identique, la résistance à la rupture Rm de l'acier A augmente significativement si on effectue une petite déformation plastique en allongement, entre le recuit à haute température et le traitement thermique à basse température. Par exemple, on voit que pour un taux d'allongement total égal à 15% réalisé en une seule fois après traitement thermique à basse température, la valeur de Rm est égale à 645 MPa. En revanche, si on effectue une déformation plastique intermédiare avec un taux d'allongement égal à 3%, le taux d'allongement total restant égal à 15% (ce qui signifie que l'on diminue le taux d'allongement au cours du laminage à froid secondaire), la valeur de Rm est égale à 675 MPa.

Cette déformation plastique intermédiaire en allongement peut être effectuée par planage sous traction ou par laminage.

Les analyses micrographiques des échantillons ont permis de constater que le nombre de grains par mm$^2$ est plus important (supérieur à 20000), et que les carbures, lorsqu'ils se sont formés sont de la cémentite intergranulaire.

Ainsi ce procédé de fabrication permet de réaliser un d'acier bas carbone calmé à l'aluminium pour emballage, comportant en poids entre 0,022 et 0,035 % de carbone, entre 0,15 et 0,25 % de manganèse, entre 0,040 et 0,070 % d'aluminium, entre 0,0035 et 0,0060% d'azote, le reste étant du fer et des impuretés résiduelles inévitables, qui présente à l'état vieilli un taux d'allongement A% satisfaisant la relation :

$$(670 - Rm) / 14 \leq A\% \leq (720 - Rm) / 17$$

Rm étant la résistance maximale à la rupture de l'acier, exprimée en MPa.

Les effets du procédé selon l'invention (traitement thermique à basse température après refroidissement rapide) sont également visibles pour des aciers dont la teneur en carbone est supérieure à 0,040 %. c'est typiquement le cas des aciers utilisés pour des applications ne nécessitant pas un emboutissage sévère, par exemple pour réaliser des corps de boites trois pièces ou des fonds de boites. La teneur en carbone de ces aciers est généralement comprise entre 0,040 et 0,080%.

## Revendications

1.  Procédé de fabrication d'une bande d'acier bas carbone calmé à aluminium pour emballage, dans lequel :

    - on approvisionne une bande d'acier laminée à chaud comportant en poids entre 0,022 et 0,035 % de carbone, entre 0,15 et 0,25 % de manganèse, entre 0,040 et 0,070 % d'aluminium, entre 0,0035 et 0,0060% d'azote, le reste étant du fer et des impuretés résiduelles inévitables,
    - on effectue un premier laminage à froid de la bande,
    - on soumet la bande laminée à froid à un recuit,
    - on effectue éventuellement un laminage à froid secondaire,

    **caractérisé en ce que** le recuit est un recuit continu dont le cycle comporte :

    - une montée en température jusqu'à une température supérieure à la température de début de transformation perlitique Ac1,
    - un maintien de la bande au dessus de cette température pendant une durée supérieure à 10 secondes,
    - un refroidissement rapide de la bande jusqu'à une température inférieure à 100° C à une vitesse de refroidissement comprise entre 100° C par seconde et 500° C par seconde,
    - un traitement thermique à basse température comprise entre 100° C et 300° C pendant une durée supérieure à 10 secondes,
    - et un refroidissement jusqu'à la température ambiante.

2.  Procédé selon la revendication 1, **caractérisé en ce que**, après refroidissement rapide de la bande et avant traitement thermique à basse température, on effectue une opération de déformation plastique en allongement de la bande avec un taux d'allongement compris entre 1 et 5%.

3.  Procédé selon la revendication 1, **caractérisé en ce que** la bande est maintenue au cours du recuit à une température comprise entre Ac1° C et 800° C, pendant une durée de 10 secondes à 2 minutes.

**4.** Procédé selon la revendication 1, **caractérisé en ce que** la bande est maintenue au cours du traitement thermique à basse température comprise entre 100° C et 300° C, pendant une durée comprise entre 10 secondes et 2 minutes.

**5.** Procédé selon la revendication 2, **caractérisé en ce que** l'opération de déformation plastique en allongement de la bande est effectuée par planage sous traction.

**6.** Procédé selon la revendication 2, **caractérisé en ce que** l'opération de déformation plastique en allongement de la bande est effectuée par laminage.

**7.** Tôle d'acier bas carbone calmé à l'aluminium pour emballage, comportant en poids entre 0,022 et 0,035 % de carbone, entre 0,15 et 0,25 % de manganèse, entre 0,040 et 0,070 % d'aluminium, entre 0,0035 et 0,0060% d'azote, le reste étant du fer et des impuretés résiduelles inévitables, fabriquée selon le procédé des revendications 1 à 6, **caractérisé en ce qu'**elle présente à l'état vieilli un taux d'allongement A% satisfaisant la relation :

$$(670 - Rm) / 14 \leq A\% \leq (720 - Rm) / 17$$

Rm étant la résistance maximale à la rupture de l'acier, exprimée en MPa.

**8.** Tôle d'acier selon la revendication 7, **caractérisée en ce que** l'acier comporte des atmosphères de COTTRELL et/ou des carbures epsilon précipités à basse température, et présente un nombre de grains par mm$^2$ supérieur à 20000.

**Patentansprüche**

**1.** Verfahren zur Herstellung eines Bands aus aluminiumberuhigtem Stahl mit geringem Kohlenstoffgehalt zur Verpackung, wobei:

- ein Band aus warmgewaltzem Stahl bereitgestellt wird, welches zwischen 0,022 und 0,035 Gewichts-% Kohlenstoff, zwischen 0,15 und 0,25 Gewichts-% Mangan, zwischen 0,040 und 0,070 Gewichts-% Aluminium, zwischen 0,0035 und 0,0060 Gewicht-% Stickstoff aufweist, wobei der Rest Eisen und verbleibende unvermeidbare Verunreinigungen sind,
- ein erstes Kaltwalzen des Bands durchgeführt wird,
- das kaltgewalzte Band einer Glühbehandlung unterworfen wird,
- gegebenenfalls ein zweites Kaltwalzen durgeführt wird,

**dadurch gekennzeichnet, dass** die Glühbehandlung eine kontinuierliche Glühbehandlung ist, deren Zyklus aufweist:

- einen Temperaturanstieg bis zu einer Temperatur oberhalb der Temperatur des Beginns der perlitischen Umwandlung Ac1,
- eine Aufrechterhaltung des Bands oberhalb dieser Temperatur für einen Zeitraum größer als 10 Sekunden,
- eine schnelle Abkühlung des Bands bis zu einer Temperatur unterhalb 100 °C mit einer Kühlungsgeschwindigkeit zwischen 100 °C pro Sekunde und 500 °C pro Sekunde,
- eine thermische Behandlung bei niedriger Temperatur zwischen 100 °C und 300 °C für einen Zeitraum größer als 10 Sekunden,
- und eine Abkühlung bis zur Raumtemperatur.

**2.** Verfahren nach Anspruch 1, **dadurch gekennzeichnet, dass** nach der schnellen Abkühlung des Bands und vor der thermischen Behandlung bei niedriger Temperatur, ein Vorgang zur plastischen Dehnungsverformung des Bands mit einer Dehnungsrate zwischen 1 bis 5% durchgeführt wird.

**3.** Verfahren nach Anspruch 1, **dadurch gekennzeichnet, dass** das Band während der Glühbehandlung bei einer Temperatur zwischen Ac1 °C und 800°C für einen Zeitraum von 10 Sekunden bis 2 Minuten gehalten wird.

**4.** Verfahren nach Anspruch 1, **dadurch gekennzeichnet, dass** das Band während der thermischen Behandlung bei einer niedrigen Temperatur zwischen 100 °C und 300 °C für einen Zeitraum zwischen 10 Sekunden und 2 Minuten gehalten wird.

**5.** Verfahren nach Anspruch 2, **dadurch gekennzeichnet, dass** der Vorgang zur plastischen Dehnungsverformung des Bands durch Walzen unter Ziehen durchgeführt wird.

**6.** Verfahren nach Anspruch 2, **dadurch gekennzeichnet, dass** der Vorgang zur plastischen Dehnungsverformung des Bands durch Walzen durchgeführt wird.

**7.** Blech aus aluminiumberuhigtem Stahl mit geringem Kohlenstoffgehalt zur Verpackung, welches zwischen 0,022 und 0,035 Gewichts-% Kohlenstoff, zwischen 0,15 und 0,25 Gewichts-% Mangan, zwischen 0,040 und 0,070 Gewichts-% Aluminium, zwischen 0,0035 und 0,0060 Gewicht-% Stickstoff aufweist, wobei der Rest Eisen und verbleibende unvermeidbare Verunreinigungen sind, hergestellt nach dem Verfahren der Ansprüche 1 bis 6, **dadurch gekennzeichnet, dass** es im Gebrauchszustand eine Dehnungsrate A% aufweist, welche die Gleichung erfüllt:

$$(670 - \mathrm{Rm}) / 14 \leq \mathrm{A} \% \leq (720 - \mathrm{Rm}) / 17$$

wobei Rm die maximale Bruchfestigkeit des Stahls ausgedrückt in MPa ist.

**8.** Blech aus Stahl nach Anspruch 7, **dadurch gekennzeichnet, dass** der Stahl Cottrell-Wolke und/oder bei niedriger Temperatur ausgefällte Epsilon Carbide aufweist, und eine Anzahl von Körnern pro $mm^2$ höher als 20000 aufweist.

**Claims**

**1.** Process for producing a low-carbon aluminium-killed steel strip for packaging, in which:

- a hot-rolled steel strip comprising between 0.022 and 0.035% by weight carbon, between 0.15 and 0.25% by weight manganese, between 0.040 and 0.070% by weight aluminium and between 0.0035 and 0.0060% by weight nitrogen, the remainder being iron and unavoidable residual impurities, is provided,
- a first cold-rolling of the strip is performed,
- the cold-rolled strip is subjected to annealing,
- a secondary cold-rolling is possibly performed,

**characterised in that** annealing is a continuous annealing, the cycle of which is composed of:

- a rise in temperature to a temperature higher than the starting temperature of pearlite transformation $Ac_1$,
- maintaining the strip above this temperature for a period of more than 10 seconds,
- rapid cooling of the strip to a temperature lower than 100°C at a cooling rate between 100°C per second and 500°C per second,
- low-temperature heat treatment of between 100°C and 300°C for a period of more than 10 seconds,
- and cooling to room temperature.

**2.** Process according to claim 1, **characterised in that** after rapid cooling of the strip and before low-temperature heat treatment, an elongation plastic deformation operation of the strip at an elongation rate of between 1 and 5% is performed.

**3.** Process according to claim 1, **characterised in that** during annealing the strip is kept at a temperature of between Ac1°C and 800°C for a period of 10 seconds to 2 minutes.

**4.** Process according to claim 1, **characterised in that** during the low-temperature heat treatment the strip is kept at between 100°C and 300°C for a period of between 10 seconds and 2 minutes.

**5.** Process according to claim 2, **characterised in that** the elongation plastic deformation operation of the strip is performed by tension levelling.

6. Process according to claim 2, **characterised in that** the elongation plastic deformation operation of the strip is performed by rolling.

7. Low-carbon aluminium-killed steel sheet for packaging, comprising between 0.022 and 0.035% by weight carbon, between 0.15 and 0.25% by weight manganese, between 0.040 and 0.070% by weight aluminium and between 0.0035 and 0.0060% by weight nitrogen, the remainder being iron and unavoidable residual impurities, produced according to the process of claims 1 to 6, **characterised in that** in the aged state it has an elongation rate A% fulfilling the relation:

$$(670 - Rm) / 14 \leq A\% \leq (720 - Rm) / 17$$

Rm being the maximum tensile strength of the steel expressed in MPa.

8. Steel sheet according to claim 7, **characterised in that** the steel is composed of COTTRELL atmospheres and/or epsilon carbides precipitated at low temperature and has a number of grains per $mm^2$ greater than 20,000.

**FIG. 1**

**FIG. 2**

**FIG. 3**

**FIG. 4**

**FIG. 5**

**FIG. 6**

**FIG. 7**

**FIG. 8**